(19) Europäisches Patentamt
European Patent Office
Office européen des brevets

(11) Publication number: **0 505 922 A2**

(12) **EUROPEAN PATENT APPLICATION**

(21) Application number: **92104754.4**

(51) Int. Cl.5: **G06K 15/22**

(22) Date of filing: **19.03.92**

(30) Priority: **26.03.91 US 675150**

(43) Date of publication of application:
**30.09.92 Bulletin 92/40**

(84) Designated Contracting States:
**AT BE CH DE DK ES FR GB GR IT LI LU MC NL PT SE**

(71) Applicant: **SUMMAGRAPHICS CORPORATION**
**60 Silvermine Road**
**Seymour, CT 06483(US)**

(72) Inventor: **Poole, Dan R.**
**8803 Tweed Berwich**
**Austin, Texas 78750(US)**
Inventor: **Freeman, Marvin**
**1401 Windy Cove**
**Round Rock, Texas 78681(US)**

(74) Representative: **Checcacci, Giorgio**
**Porta, Checcacci & Botti Corso di Porta Romana, 123**
**I-20122 Milano(IT)**

(54) **Apparatus and method for plotting using polyline vector lookahead.**

(57) A graphics plotter for drawing a series of connected vector lines forming a plot. The plotter has a motor control for controlling motors which drive a pen to move relative to a medium at a variable velocity in a plane defined by a major axis and a minor axis perpendicular to the major axis. The motor control determines a minimal nonzero terminal velocity of the pen along the major axis at a point at which a maximum change in direction occurs. The motor control has a program for determining a minimal nonzero optimal velocity at the point of maximum change in direction. The minimal nonzero optimal velocity is the junction of a ramped-down optimal velocity preceding the point of maximum change in direction and a ramped-up optimal velocity succeeding the point of maximum change in direction. The motor control also includes a double integrating filter implemented in the sampled domain for limiting the acceleration of the pen along the major axis at the point of maximum change in direction to a discrete value such that the difference between the actual pen trajectory and a desired pen trajectory is an amount less than or equal to a predetermined acceptable error.

**FIG. 1**

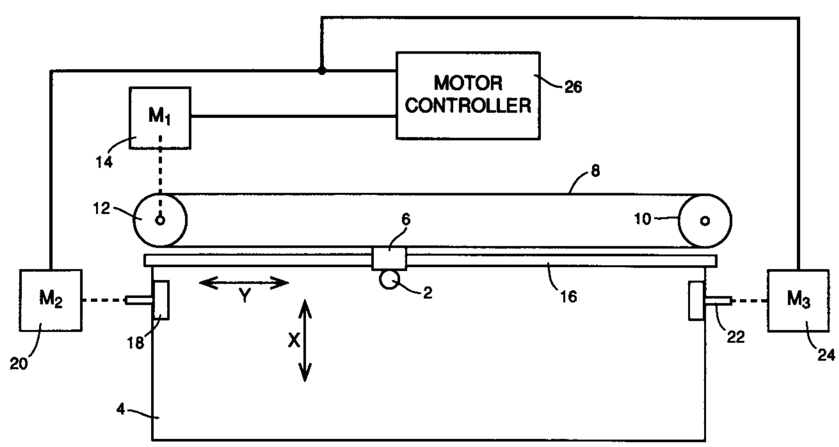


EP 0 505 922 A2

## FIELD OF THE INVENTION

The present invention relates to graphic plotters and, more particularly, to a graphic plotter having a motor for driving a pen-holding carriage in the Y direction, a motor for driving a web of medium in the X direction and a motor controller for accelerating and driving the respective motors in such a manner that the pen draws a series of vector lines.

## BACKGROUND OF THE INVENTION

The major components of a conventional vector plotter are shown in simplified form in FIG. 1. The vectors are drawn on a sheet of paper 4 by a pen 2 which is mounted on a carriage 6 movable in the Y direction. The carriage 6 in turn is slidably mounted on a straight bar 16 and is also connected to a conveyor belt 8 which is rotatably supported by wheels 10 and 12. One of the two wheels -- in this example, wheel 12 -- is coupled to driving motor 14, which drives the belt 8, thereby causing displacement of pen 2 along the straight bar 16, i.e., along the Y axis. The paper sheet 4 is movable in the X direction by means of a pair of pinch rollers 18 and 22, which are driven by motors 20 and 24 respectively. Motors 14, 20 and 24 are controlled by motor controller 26 in accordance with the plotting data corresponding to the vectors to be drawn by the pen.

It is well known in the graphics plotter art to control the velocity or acceleration of the pen during the drawing of a vector in dependence on some characteristic of the vector to be drawn. For example, U.S. Patent No. 4,776,097 discloses a technique for looking ahead at the characteristics of the next vector to be drawn and controlling the motors as a function of those characteristics to enable the most efficient drawing of that next vector. In particular, a step acceleration is applied to a motor if the next vector to be drawn has a length less than a predetermined value and a ramp acceleration is applied to the motor if the next vector to be drawn has a length greater than that predetermined value.

Similarly, U.S. Patent No. 4,062,648 discloses a plotter system wherein the velocity at which a next vector is to be drawn by a pen is selected in dependence on the length of that next vector to be drawn.

Thus, these prior art patents merely disclose that the velocity or acceleration of the pen can be varied for each vector to be drawn in dependence on some characteristic of that same vector, for example, the length of the vector.

In conventional plotters, the pen starts and ends each vector line segment at zero velocity, i.e., at the start and end of each vector the X and Y velocity components equal zero. The velocity is ramped up at the beginning of each segment, and ramped back down at the end. The velocity for the major axis (the longest axis) is ramped at the predetermined acceleration rate which the machine is capable of (i.e. 4g). The minor axis velocity will be the slope of the line (minor axis length divided by major axis length) times the major axis velocity. The acceleration experienced by the minor axis will be equal to the major axis acceleration for 45 degree lines, and less for all others.

Such systems are disadvantageous because while the pen is stationary, a disproportionate amount of ink from the pen can accumulate at the point of contact of the pen tip with the writing surface. This accumulation of ink gives rise to a sequence of plotted line segments which are appear nonuniform at the beginning and end of the line segments.

U.S. Patent No. 3,893,616 discloses an electromechanical plotter wherein the speed of the pen is controlled to produce nonzero velocity at the end points of line segments. However, this patent does not disclose how to determine the optimal pen velocity at any instant. Such a system is disadvantageous because any deviation from the optimal velocity results in inaccurate plotting. The velocity must be optimized in dependence on the electromechanical constraints of the plotter, the lengths of the line segments and the changes in direction of successive line segments.

## SUMMARY OF THE INVENTION

Most drawings contain many curves which are defined by a series of very short line segments or vectors connected together. Such a curve will hereinafter be referred to as a "polyline". The object of the invention is to significantly reduce the time required to plot a polyline without degrading the uniformity or accuracy of the plotted polyline. In short, it is the goal of the invention to plot as fast as possible without exceeding the acceleration limits of the machine and without introducing noticeable errors.

The foregoing object of the invention is achieved in accordance with the vector plotter of the invention by incorporating means for performing a vector lookahead technique that enables a polyline to be plotted without coming back to zero velocity between each line segment or vector. This requires ramping up the major axis velocity during each segment at the beginning of the curve, and ramping back down during each segment at the end of the curve.

The velocity for the major axis (the longest axis) is ramped at the predetermined acceleration rate which the machine is capable of (i.e. 4g). The minor axis velocity will be the slope of the line (minor axis length divided by major axis length) times the major axis velocity. The minor axis will still see an acceleration which is the ratio of slope times the major axis acceleration. However, it will see an additional acceleration which is due to direction change. At each vertex, the slope will change and the minor axis will have an instantaneous acceleration due to direction change. We will refer to these two components of minor axis acceleration as linear (that which is along the length of the line and is used to ramp up and down at the beginning and end) and normal (that which is caused by change of direction). This normal acceleration can quickly exceed the limits of the machine if either the velocity or the change of direction is very large.

With the addition of a short filter on the reference velocity, fairly large step changes in velocity on the minor axis can be accommodated. The major axis may continue at or near maximum velocity, and the minor axis can step by the change in the slope. The filter will convert this step change to a short ramp profile with a small error, spreading out the normal acceleration, so that it remains within the limits of the machine. The small error introduced will result in a slight smoothing of the curve. The size of this error is based on the amount of curvature, the velocity, and the filter characteristics.

In accordance with the invention the period of time required to draw a polyline consists of a first period during which the pen velocity is ramped up and a second during which the pen velocity is ramped down. If the line is long enough, it will also have an intermediate period during which the pen is at constant velocity. The portion of the polyline drawn at constant velocity connects the polylines portions respectively drawn during ramping and ramping down. With vector lookahead, each of these periods may include several line segments. In accordance with the method of the invention, the ramp profile is generated in two parts.

In the first part a forward or ramp-up profile is generated. In accordance with this technique, the maximum velocity and acceleration which can be achieved at each vector or line segment are determined without regard for getting back to zero velocity at the end of the polyline. The forward profile so generated will be a profile that ramps up toward the maximum velocity, but never ramps back down again. It will however, include velocity restrictions necessitated by changes in direction. These will be a step down followed by the next ramp up.

The second part is started later at the end of the polyline and entails an analysis of the velocity requirements looking backwards. The velocity of the pen at the end of each segment is calculated, so the pen velocity can be ramped down prior to sharp changes in direction and can be ramped down to zero velocity at the end of the polyline. This profile will then include all three periods: ramp up, constant velocity, and ramp down.

## BRIEF DESCRIPTION OF THE DRAWINGS

The preferred embodiment of the invention will be described hereinafter in detail with reference to the drawings, wherein:

FIG. 1 is a block diagram showing some of the main components of a conventional vector pen plotter.

FIG. 2 depicts an exemplary multicurved polyline which can be accurately plotted in accordance with the invention.

FIG. 3 is a graph of the forward profile of the X component of the pen velocity versus the X coordinate of the pen location calculated during the lookahead phase for the polyline depicted in FIG. 2.

FIG. 4 is a graph showing the reverse profile of the X component of the pen velocity versus the X coordinate of the pen location calculated during the lookback phase for the polyline depicted in FIG. 2.

FIG. 5 shows the relationship between the polyline of FIG. 2 and the in_thresh and end_thresh values in accordance with the preferred embodiment of the invention.

FIGS. 6 and 7 are graphs showing successive reverse profiles of the X component of the pen velocity versus the X coordinate of the pen location calculated when the number of vectors of the polyline of FIG. 5 exceeds the capacity of the queue.

FIG. 8 is a block diagram showing some of the main components of the servomotor control system in accordance with the preferred embodiment of the invention.

## DETAILED DESCRIPTION OF THE PREFERRED EMBODIMENTS

For a given vector with a given velocity there is a maximum velocity change possible, which change is determined by the vector length and the maximum permissible acceleration. This velocity change is determined by the formula:

$V_f^2 = V_i^2 \pm 2\underline{a}S$ (1)

where S is the length of the vector; $\underline{a}$ is the maximum acceleration or deceleration; $V_i$ is the initial velocity; and $V_f$ is the final velocity.

In the case of long vectors the maximum velocity may be obtainable. For a consecutive sequence of vectors with an initial velocity of zero, maximum terminal velocities are determined using equation (1). Also, if the sequence of vectors end with zero velocity the same formula determines the maximum initial velocities of these vectors. The terminal velocity of one vector becomes the initial velocity of the next vector and the initial velocity becomes the terminal velocity of the previous vector.

The final velocities are also limited by changes in the ratio of the minor axis to the major axis. If the velocity at the junction of two vectors is nonzero, this change results in a nonzero velocity change which is discontinuous. The infinite acceleration associated with this is undesirable and is limited by a filter in this method. This filter causes errors in the actual trajectory, but does limit the acceleration. The lower the velocity the lover the acceleration and trajectory error. It is desirable that the relationships between terminal velocity, slope change, acceleration and error be calculable so that a minimum terminal velocity can be determined for some acceptable error.

In modern plotters the control loops are implemented in a sampled domain for better servo stability and repeatability. Therefore, in accordance with the method of the present invention the velocity profiles are implemented in the sampled domain, which allows the velocity filter to be implemented in the sampled domain. This allows filter characteristics to be predictable and easy to calculate as opposed to analog filters or letting mechanical hardware do the filtering. It can be shown for sufficiently small sample times in comparison to the time constants of the driven system, that the sample points characterize the continuous response of the driven system. In the case of the preferred embodiment, the sample time is 0.25 msec, whereas the shortest time constant in the system is 1.0 msec. In this case the system behaves as an integrator and an integrating filter used in the sampled domain behaves as a continuous integrating filter. The error in this approximation is bounded by terms proportional to the sample period. This justifies analysis and implementation in the sampled domain. The control loops in plotters operate in this range of sample times.

A symmetrical Finite Impulse Response (FIR) filter is used because of its constant phase characteristics. A double integrating filter is chosen because limiting the error caused by the filter will also limit the accelerations generated by the filter.

The double integrating filter in the sample domain is given by the following formula:

$$f(z) = \frac{1}{n^2}\frac{(1-z^{-n})^2}{(1-z^{-1})^2} = \frac{1}{n^2}\left[1+2z^{-1}+3z^{-2}--- +nz^{-n+1}+--- + 2z^{-2n+2}+z^{-2n+1}\right] \qquad (2)$$

If the position and acceleration sequences are given by p(z) and $\underline{a}$(Z) respectively, then the filtered position and acceleration are given by:

$a_f(z)=f(z)a(z)$ (3)

$p_f(z)=f(z)p(z)$ (4)

$$\overline{p(z)} = \frac{T^2}{2}\frac{1+z^{-1}}{(1-z^{-1})^2}a(z) \qquad (5)$$

where T is the sample time.

The error is given by the following formula:

$$e(z)=p_f(z)-z^{-n+1}p(z)=\frac{1}{n^2}\frac{T}{2}(1+z^{-1})\frac{(1-z^{-n})^2-n^2z^{-n+1}(1-z^{-1})^2}{(1-z^{-1})^4}a(z) \quad (6)$$

From this it can be shown that:

$$|a_f(z)| \leq \frac{1}{T^2}\frac{12}{n^2-1}e_{max} \quad (7)$$

where $e_{max} \geqq |e(z)|$, so that limiting the error will limit the accelerations of the filtered velocity. The errors can be calculated for a given plot trajectory from equation (6). The terminal velocities can he lowered where necessary so that the maximum error conditions are not exceeded.

At constant velocity, the maximum error for a single slope change occurring within the double integrating filter window can be evaluated. The error can be rewritten in terms of the velocity using the following formula:

$$v(z)=\frac{T}{1-z^{-1}}a(z) \quad (8)$$

Therefore, the error can be written as follows:

$$e(z)=\frac{1}{n^2}\frac{T}{2}(1+z^{-1})\frac{(1-z^{-n})^2-n^2z^{-n+1}(1-z^{-1})^2}{(1-z^{-1})^3}v(z)$$

$$=\frac{1}{n^2}\frac{T}{2}(1+z^{-1})\left[\binom{2}{2}+\binom{3}{2}z^{-1}+\cdots+\binom{n}{2}z^{-n+2}-\binom{n}{2}z^{-n+1}-\cdots-\binom{3}{2}z^{-2n+3}\right]v(z) \quad (9)$$

The maximum error for the velocity change ΔrV (Δr is the slope or rate change, V is the velocity) can then be shown to be:

$$|e(z)| \leq \frac{n^2-1}{6n}\Delta rVT=e_{max} \quad (10)$$

The filtered error can then be considered to consist of two parts: in error which will occur due to acceleration and an error which will occur due to a constant velocity slope change. (One slope change per filter window is allowed.) This allows for easy implementation -- separate error margins can be allowed for acceleration and slope change respectively.

For example, if the maximum acceleration $a_{max}$ = 4g, the maximum error $e_{max}$ = 2 mils and the sample time T = 1 msec, then:

$$a_{max}=\frac{1}{T^2}\frac{12}{n^2-1}e_{max} \quad or \quad n=(1+\frac{12}{T^2}\frac{e_{max}}{a_{max}})^{1/2}=4 \quad (11)$$

With n=4 the filter window is 8 msec. As long as the evaluated error is less than $e_{max}$ (2 mils), the

acceleration will be less than $a_{max}$ (4g). From the relationship for constant velocity slope change (see equation (10)) it is required that:

$$\Delta rV \leq \frac{e_{max}}{T} \frac{6n}{(n^2-1)} = \frac{e_{max}}{T} 1.6 = 3.2 \text{ mils/sec} \qquad (12)$$

Then the filtered acceleration will be less than $a_{max}$ (4g). Given the known slope change, the terminal velocities can be adjusted so that this condition is met. As long as this condition is met, the acceleration and error will be appropriately limited. It is possible to have slope change during acceleration and for this case the velocity can be adjusted lower to allow a margin for the additional acceleration due to slope change filtering. This becomes just one more condition in determining the minimum terminal velocity.

## Implementation

In accordance with the preferred embodiment of the invention, the motor controller 26 of FIG. 1 is programmed with firmware consisting of three main parts: (1) a Background routine; (2) an Interrupt routine; and (3) a Servo Control routine.

The Background routine generates a ramp profile for each vector in the polyline. This will be explained in detail hereinafter.

The Interrupt routine is implemented in a Motorola 68000 microprocessor, hereinafter referred to as the "main processor". The Interrupt routine uses the ramp profile to generate velocity requirements for the servo control. The Interrupt routine also does the velocity filtering and generates feedforward control parameters for the servo control. The filter used is a double integrating filter with a time constant of 8 msec, which guarantees a maximum error of 0.002 inch (2 mils) for accelerations of up to 4g.

The Servo Control routine is implemented in an NEC 78312A microcontroller (element 34 in FIG. 8). It receives velocity and feedforward information from the main processor (element 38 in FIG. 8) and controls the servo motors accordingly. This routine is independent of the polyline lookahead, which is performed by the main processor.

## Data Structures

A move command is put into the servo queue for each line segment or vector. Each move command has 7 words (16 bits each) containing the following data:

| ID | Format | Description |
|---|---|---|
| A: | 8.8 | Acceleration |
| VU: | 16.0 | Ramp up velocity squared |
| VD: | 16.0 | Ramp down velocity squared |
| VM: | 8.8 | Maximum velocity |
| DX: | S15.0 | Relative X movement |
| DY: | S15.0 | Relative Y movement |
| R: | S1.14 | Slope: ratio minor/major axis |
| Format designation: si.f, where s is S if signed, followed by i bits of integer, followed by f bits of fraction. | | |

It should be emphasized that the words VU and VD represent the velocity components along the major axis for the forward and reverse profiles respectively when the pen is at the end of each line segment. The VU and VD values are actually entered in the servo queue as the square of the velocity. This form is picked to simplify the mathematics used in the servo ramp generator.

## Axis Switching

The axes are identified as major and minor, with the major axis being the axis which has the longest movement required for the current vector segment. Note that the major axis will switch between the X (paper) axis and the Y (pen) axis every time the slope goes above or below 45 degrees. The example depicted in FIGS. 2 through 4 does not include an axis switch. This should make understanding the concept easier, but it is not required for the algorithm, which will transition smoothly from X major to Y major and vice versa.

Also the "constant velocity" period is shown in FIGS. 3 and 4 as constant for the major axis, but this will normally vary to provide constant velocity of the pen tip.

Background Routine

Every line or polyline consists of a ramp up period and a ramp down period. If the line is long enough, it will also have a constant velocity period in the middle. With vector lookahead, each of these periods may include several line segments. The Background routine generates this ramp profile in two parts. A copy of the Background routine is annexed as pages A1 to A13.

The first part generates the forward or ramp up profile. This determines the maximum velocity and acceleration which can be achieved at each segment without regard for getting back to zero velocity at the end of the polyline. The forward profile routine generates all database values except VD. The VU values it generates will be a profile that ramps up to maximum velocity, but never ramps back down again. It will however, include velocity restrictions required due to direction change. These will be a step down followed by another ramp up.

Thereafter the second part will start at the end of the polyline and work backwards, calculating the velocity (VD) at which each segment must finish, so that we can safely ramp down for sharp direction changes and to zero velocity at the end of the polyline. This VD profile will then include all three periods: ramp up, constant velocity, and ramp down.

The exemplary curved polyline shown in FIG. 2 is defined by many points, four of which are labeled by the letters A, B, C, and D. The boundary conditions are that the pen must have zero velocity at points A and D. Also it is understood that the pen must have a velocity at the points of greatest curvature, i.e., B and C, which is less than the velocity along substantially straight portions of the polyline to ensure accurate plotting.

As discussed in detail below, a velocity profile is determined which satisfies all of these conditions in accordance with the method of the invention. Such a velocity profile is shown in FIG. 4. As is apparent from that profile, the pen velocity is ramped up from the starting point A and from the points of greatest curvature B and C, and the pen velocity is ramped down as points B, C and D are approached.

Forward Profile

The VM value is the maximum velocity attainable at a given point on the polyline for the major axis. This will be constrained by the slope of the polyline at that given point if constant pen velocity is enabled. In the case of the preferred embodiment, the VM value will also be constrained by the velocity limits for the respective axes.

The VU value is the major axis velocity which may be attained at the end of a line segment or vector without regard for ramping back down to a stop. FIG. 3 is a graph showing the VU values for each of the points along the polyline depicted in FIG. 2. Assuming N vectors make up the polyline, then the VU value at the end of the n-th vector can he written as VU(n), where $O < n \leqq N$, and n and N are integers. In accordance with the preferred embodiment of the invention, the velocity VU is limited so that the normal acceleration of the minor axis is less than 3/4 of the acceleration limit for the minor axis. Therefore at least 1/4 of the total minor axis acceleration is available for linear acceleration. The VU value is thus limited by the linear acceleration, maximum velocity, and segment length as follows:

1. $VU(n) \leqq VU(n-1) + 2A(n) \cdot$ segment__length(n) (limited by linear acceleration), where VU(n-1) denotes the VU value at the end of the (n-1)-th vector, i.e., at the start of the n-th vector, A(n) denotes the pen acceleration for the n-th vector and segment__length(n) denotes the length of the n-th vector.
2. $VU(n) \leqq VM(n)$ (limited by maximum velocity at which the pen can be moved).
3. $VU(n) \leqq$ segment__length(n)/1 msec (prevents multiple vertices per interrupt, which simplifies some of the calculations and provides for a deterministic maximum interrupt time).

In accordance with the preferred embodiment, the major axis acceleration limit A is then calculated, so that the major and minor axis capabilities are not exceeded. With the normal acceleration (i.e., acceleration due to direction change) limited to 3/4 of the minor axis limit, it is assured that at least 1/4 of the capabilities are available for linear acceleration (i.e., acceleration not due to direction change). Since the normal acceleration is low at low velocities, most of the acceleration capability is available for linear acceleration at the beginning of the polyline, where the pen will be moving slowly. The acceleration is the same whether the pen velocity is being ramped up or ramped down.

DX and DY are 16-bit values representing relative X and Y displacement. DX and DY are limited to 16 bits to simplify the math and because with the vector lookahead, longer moves may be broken into multiple shorter moves with no penalty in throughput. The slope R of each vector is saved in the table since it is used both in the background routine and the interrupt routine. By storing R, it need not be recalculated by the Interrupt routine.

Reverse Profile

The second part, i.e., the reverse profile calculation, is performed by the reverse_ramp routine. This routine starts at the last point entered and goes back through the buffer, calculating the terminal velocity VD of each point based on the acceleration and terminal velocity of the point which follows it in the buffer:

VD(N) = 0 (zero velocity et point D)
VD(n-1) = min(VU(n-1), VD(n) + 2A(n) • segment_length(n))

FIG. 4 is a graph showing the VD values for each of the points along the polyline depicted in FIG. 2.

The number of segments for which this calculation is done is equal to the sum of the in_count and ramp_count registers. The in_count register stores the number of segments which have been added since the previous reverse profile calculation. The ramp_count register stores the number of segments which were needed to ramp down to zero in the previous reverse profile calculation. Each time the ramp down profile is determined, the contents of the in_count register are added to the contents of the vec_cmndcnt register, which stores the number of segments which the interrupt routine can access.

The calculation of the reverse profile is scheduled based on various conditions. Any time a string of vectors is broken by a pen up condition or a sharp change in direction occurs, the flush routine is called. This routine determines the ramping down of velocity necessary to arrive at the detected condition, and then clears the ramp_count, so that future reverse profile calculations by the reverse_ramp routine will not go past this point. The reverse profile calculation is also performed if the queue is completely full, if a large number of vertices have been added since the last reverse profile calculation, or if the servo is getting close to catching up to the ramp down point of the previous reverse profile.

In any of these later cases, a subsequent call to the reverse_ramp routine will reprocess all vectors included in ramp_count.

The scheduling of the reverse_ramp routine is based on comparing the number of commands in the servo queue with various threshold limits. It uses the following variables:

- vec_cmndcnt: This value is the number of vertices and commands which the servo can access (i.e. which were entered prior to the last reverse profile calculation).
- in_count: This value is the number of vertices which have been added since the last reverse profile calculation.
- ramp_count: The reverse ramp routine uses this value to know how far back to go. It then sets this value to the number of vertices required to ramp down for the next reverse profile calculation. The flush routine clears this value after calculating the reverse profile.
- in_thresh: This value is a fixed percent of the vector queue size. This value affects the frequency and length of delays which occur when the processor cannot keep up with the plotter. The reverse_ramp routine is called when in_count reaches this value.
- end_thresh: The reverse_ramp routine sets this value at a fixed percent between ramp_count and vec_cmndcnt if processing has not fallen behind and at zero if it has fallen behind. The reverse_ramp routine is called if vec_cmndcnt is less than end_thresh.

For the purpose of explanation, assume the curve in FIG. 5 contains more vectors than will fit in the queue. As the forward profile is generated, the in_count reaches the in_thresh at point G (see FIG. 5). At this time the reverse profile in FIG. 6 is generated. This will allow the plotter to plot up to point G, during which time as many more points after G as possible are added to the forward profile. If the plotter reaches point E (end_thresh before G), or when the forward profile reaches point H (in_thresh after G), the reverse profile is calculated again, but only back as far as point F (see FIG. 7). As long as this is accomplished before the plotter reaches point F, the plotter will be able to maintain the maximum speed. If this is not accomplished before the plotter reaches point F, the plotter will safely follow the ramp down toward zero velocity at point G. A third reverse profile will be calculated when the end of the curve is found at point D. This profile will be the same as in FIG. 4.

Interrupt Routine

The Interrupt routine is executed by the Motorola 68000 microprocessor once every millisecond to produce a new velocity value for the servo controller, i.e., the NEC 78312A micro-controller. This routine is highly optimized in assembly language. A copy of the Interrupt routine is annexed as pages B1 to B8.

The Interrupt routine his three basic parts associated with vector lookahead: (1) major axis velocity ramp control; (2) minor axis velocity ratio; and (3) velocity filter.

The ramp control uses the variable vtest as a control variable. This variable is derived from the following equation for distance s required to accelerate from velocity vi to velocity vf at acceleration a:

$$s = (vf \cdot vf - vi \cdot vi)/2a \qquad (13)$$

The VD value is vf•vf, and s is the larger of DX and DY. At each interrupt vtest is used to determine if a ramp up or ramp down should occur. The resultant velocity is then subtracted from s, and used to incrementally update vtest. The velocity has 8 bits of fraction.

The minor axis velocity is ratioed by R from the major axis velocity. The variable rem is used to save the remainder from one update to the next, so that this can be added in to prevent truncation loss (the integral of the velocities must equal DX and DY).

The velocities are filtered using an incremental implementation of a double integrating filter. The double integrating filter has the following equation:

$$vf = (1 \cdot v0 + 2 \cdot vl + 3 \cdot v2 + 4 \cdot v3 + 3 \cdot v4 + 2 \cdot v5 + 1 \cdot v6)/16 \qquad (14)$$

where v0 is the current velocity and v1 to v6 are the previous six values. The filtered velocity vf and the filtered acceleration of are incrementally calculated using the following formulas:

$$af = af + v0 + v8 - 2 \cdot v4 \qquad (15)$$

$$vf = vf + af \qquad (16)$$

Note that these variables have an additional 4 bits of fraction (due to the divisor of 16 in the filter equation) for a total of 12 fractional bits. We use a rotating buffer of 8 locations to save the last 8 raw values for each axis velocity. The oldest value is added into the af values before the new v0 is calculated, so that v8 can be overwritten in the buffer.

Any remaining fraction from the previous update is added to vf, and then the integer part is used for the velocity for this update, and the fraction is carried forward to the next update.

The Interrupt routine also processes other commands which are distinguished from the move commands by the sign of the first word. The A value in the move is always positive, so the first word of all other commands is the negative of the command index. These commands are all padded to occupy 7 words, so that they are the same size as the move commands. These commands are:

-1: Pen Up, delay steps, 5 unused words
-2: Pen Down, delay steps, 5 unused words
-3: Servo Wait, delay steps, 5 unused words
-4: X Search, ramp steps, accel, term code, scratch, 2 unused words
-5: Y Search, ramp steps, accel, term code, scratch, 2 unused words

Servo Control

The servo control is independent of the lookahead algorithm. It uses the velocity values for each axis to control the servo motors. FIG. 8 is a general depiction of the circuitry for controlling the motors, although to simplify the description, the motor controller 26 will be described in conjunction with only motor 14, which controls movement of the pen.

An optical encoder 28 coupled to motor 14 outputs pulses at regular angular intervals of rotation of the motor. Thus the encoder output represents the Y component of the pen velocity. The encoder output is received by quadrature counter 30 and then transmitted to microprocessor 34 in an acceptable form along data bus 36. In dependence on the actual measured velocity V(z) and the desired reference velocity V*(z), the microprocessor 34 calculates and outputs an 8-bit word P(z), representing one of 256 discrete effective voltages, to the pulse width modulator 32. The microprocessor 34 has a 4-kHz sample rate timebase; the quadrature counter 30 and pulse width modulator 32 are respectively read from and written into at the 4-kHz rate.

The motor 14 is a variable dc motor that is controlled by supplying a 20-kHz waveform with a variable duty cycle at a 20-V level. For example, to drive the motor at an average voltage of 2 V, the duty cycle must equal 10%; if an average voltage of 10 V is desired, the duty cycle must be increased to 50%.

The foregoing preferred embodiment has been described for the purpose of illustration only and not with the intent of narrowing unduly the scope of the claims. The present invention as claimed encompasses all functionally equivalent modifications and variations which would be apparent to a practitioner of ordinary skill in the art.

```
/*
 *              Copyright 1990 Summagraphics Corp.
 *
 *      SCCS File/Delta and Date
 *
 *      IDENT:  @(#)cgm_vect.c  6.1     10/9/90
 */

/* this version optimized for short vectors   12/10/85 mlf   */

#include        <stdio.h>
#include        <math.h>
#include        "define.h"
#include        "extern.h"
#include        "prot.h"

extern char an_status;
#define MOTOR_HOT 0x40          /* motor hot bit in an_status */

#define WAIT_COMMAND -3

#define SIXTEEN_BIT 32767
#define THRESHOLD    8192
#define THRESHOLD1  16384

extern short    x_maxv,x_maxa;
extern short    ax_max,vx_max,ay_max,vy_max;
short sort_thresh,sort_monitor_thresh;
short recursion_level;
extern short sort_factor;

extern short wait_time;
extern short in_factor, ramp_factor, over_factor;

short in_count;         /* number of vectors in but not reverse_ramped  */
short in_thresh;        /* max number of vectors not ramped down        */
short ramp_count;       /* number of vectors required to ramp down      */
short end_thresh;       /* number of vectors left to redo reverse_ramp  */
short vec_left;         /* number of vectors in last polyline           */

/* notes on precision of variables in this module */
/* many are long only to force long operations when they are multiplied */
/* all distances and velocities have no fractional bits */
/* all slopes have 14 fractional bits */
/* all accelerations have 8 fractional bits */

/* the following are global because     */
/* we need to know the previous vectors values */
long rx,ry;              /* slopes  (14 fraction)    */
long absr;              /* absolute value of slope  (14 fraction) */
long aminor;            /* minor axis acceleration limit (8 fraction) */
long v2;                /* velocity squared */
long ds;                /* length of vector */


#define LOW     1       /* identifies type of pen up */
#define HIGH    2
#define CHANGE  3
```

```
#define UP       1
#define DOWN     0

#define SHORT_MOVE 1000 /* idendifies short move as less than 1/2 inch */



/*  ----------  STATIC function prototypes for CGM_VECT  ----------  */
static long clip_line(long p1,long p2,long p3);


extern
long     clip_left,clip_right,    /* clip edges   */
         clip_top,clip_bottom,
         xsize,ysize,
         x_pres,y_pres;
extern
short    linetype,plot_color,
         dash_cnt,*dash_ptr,*dash_start[];

extern
char     pen_up,
         local_flag,
         dash_on;

         /* controls proportional L#+ or normal dashed lines */
char     dash_snap,dash_fix;
extern double   lfac;          /* hp linetype expansion factor */
extern long     filldeg;       /* slope of fill */

/* end of declarations from cgm_extn.h */


/* external variables for sevo command buffer   */
union mptr {long *l; short *w;};

char vectorbalflag;              /* if =1, insert servo acquire command
                                   at midpoint of vector          */
/* external variables for desired velocities and accelerations    */
extern short up_a, down_a;      /* accelerations in 8.8 format */
extern short up_v, down_v;      /* velocities in 8.8 format    */
extern short skip;
extern char cons_velocity;

/* pen delay times (in update periods)  */
extern short    pen_up_time,pen_dn1_time;
extern short    penu_delay, pend_delay, pen_dn2_time;
char     total_clip;
/* constant velocity table      */
static   short cons_vel[21]=
{ 256,          /* [0] = 256.0  */
  256,          /* [1] = 256.0  */
  256,          /* [2] = 255.5  */
  254,          /* [3] = 254.0  */
  252,          /* [4] = 251.6  */
  248,          /* [5] = 248.4  */
  248,          /* [6] = 248.4  */
```

```
    244,            /* [7] = 244.3   */
    240,            /* [8] = 239.7   */
    235,            /* [9] = 234.5   */
    229,            /* [10] = 229.0 */
    229,            /* [11] = 229.0 */
    223,            /* [12] = 223.1 */
    217,            /* [13] = 217.1 */
    211,            /* [14] = 211.0 */
    205,            /* [15] = 204.8 */
    205,            /* [16] = 204.8 */
    199,            /* [17] = 198.7 */
    193,            /* [18] = 192.7 */
    187,            /* [19] = 186.8 */
    181             /* [20] = 181.0 */
};

extern  long    x_sort, y_sort; /* last unsorted logical pen position */
extern  short   sort_color;
extern  char    up_down;        /* logical pen up/down status */

void setup_servo_que()
{
    ip.v = vecque_end.v;
    op.v = vecque_end.v;
    vecque_size = vecque_end.v - vecque_start.v;
    if(dmp_or_hp == SCAN) in_thresh = 0;
    else in_thresh = (in_factor * vecque_size)>>4;
    sort_thresh = (sort_factor * vecque_size)>>4;
    sort_monitor_thresh = sort_thresh >> 1;
    v2 = 0;
    vec_cmndcnt = 0;
    ramp_count = 0;
    vec_left = 0;
    end_thresh = 0;
}

/* increment command count, increment and wrap input and backup pointers */
void get_command_entry()
{
    flush();
    do checklocal(); while(vec_cmndcnt >= vecque_size);
    if(ip.c == vecque_end.c) ip.c = vecque_start.c;
    else ip.c++;
}

void flush()
{
    accumulate();
    reverse_ramp();
    v2 = 0;
    ramp_count = 0;
    vec_left = 0;
    end_thresh = 0;
}

/* add delay after sharp angles in polylines */
/* this must not allow entry into local */
```

```
id servo_wait()

  if(!wait_time) return;
  while(vec_cmndcnt >= vecque_size) checklocal();
  if(ip.c == vecque_end.c) ip.c = vecque_start.c;
  else ip.c++;
  ip.c->cmnd_code = WAIT_COMMAND;
  ip.c->numstep = wait_time;
  vec_cmndcnt++;


**************************************************************************/
 start of vector_plot() */

 Plot one vector from x1,y1 to x2,y2 */

id vector_plot(long x1,long y1,long x2,long y2)

  extern char hpgl_dashing;

  long c1,c2;
  long clip_edge,dx,dy,sx,sy;
  long distance,length,d;
  double      ux,uy;  /* used in dashed line calculations */

  /** HP_GL handles it's own dashing for the most part **/
  if( hpgl_dashing )
  {
      hp_dashline(x1,y1,x2,y2);
      return;
  }

  c1 = cell(x1,y1);                 /* compute clip cells  */
  c2 = cell(x2,y2);
  total_clip = 0;
  while (c1 | c2)
  {
      if (c1 & c2)                  /* totally out of window        */
      {
          total_clip = 0;
          up_down = UP;
          checklocal();

          if(optimize != 0)         /* sort buffers empty - raise pen */
          {
              if(plot_sorted() == 0) penup();
          }
          else                      /* not sorting - raise pen */
              penup();

          return;
      }
      dx = x1 -x2;
      dy = y1 -y2;
      if (c1 & 3)                   /* clip start of vector to x    */
      {
```

```
            if (cl & 1) clip_edge = clip_left;
            else        clip_edge = clip_right;
            yl += clip_line(dy,clip_edge-xl,dx);
            xl = clip_edge;
            cl = cell(xl,yl);
        }
        else if (cl & 0xc)                       /* clip start of vector to y
        {
            if (cl & 8) clip_edge = clip_top;
            else        clip_edge = clip_bottom;
            xl += clip_line(dx,clip_edge-yl,dy);
            yl = clip_edge;
            cl = cell(xl,yl);
        }
        else if (c2 & 3)                         /* clip end of vector to x
        {
            if (c2 & 1) clip_edge = clip_left;
            else        clip_edge = clip_right;
            y2 += clip_line(dy,clip_edge-x2,dx);
            x2 = clip_edge;
            c2 = cell(x2,y2);
        }
        else if (c2 & 0xc)                       /* clip end of vector to y
        {
            if (c2 & 8) clip_edge = clip_top;
            else        clip_edge = clip_bottom;
            x2 += clip_line(dx,clip_edge-y2,dy);
            y2 = clip_edge;
            c2 = cell(x2,y2);
        }
    }
    /* clipping finished */


    dx = x2 -xl;
    dy = y2 -yl;

    if((sx = x_sort - xl) < 0) sx = -sx;
    if((sy = y_sort - yl) < 0) sy = -sy;

    /* move to starting point with pen up */
    if( (sx > 1) || (sy > 1) || (sort_color != plot_color) )
    {
        sort_color = plot_color;
        up_down = UP;
        sort_move(xl,yl);
        dash_cnt = 0;
    }


    /* see if nothing left to plot */
    if ( !dx && !dy )
    {
        up_down = DOWN;                    /* draw 0 length vector */
        sort_move(x2, y2);                 /* needed to put the pen down */
        return;
    }

    if (linetype)
    {
```

```
/* dash the vector      */
/* use x_uncal() and y_uncal to "calibrate" dash pattern length */
ux = (double) x_uncal(dx);      /* only used in length calculation */
uy = (double) y_uncal(dy);
length = sqrt( ux*ux + uy*uy)/lfac;
if (dash_snap)          /* force to even number of patterns */
{
   dash_ptr = dash_start[linetype-1];
   dash_cnt = *dash_ptr++;
   while(*dash_ptr) dash_cnt += *dash_ptr++;     /* sum pattern length */
   length = (length + (dash_cnt>>1))/dash_cnt;  /* number of patterns */
   if(!length) length = 1;      /* at least 1 pattern */
   length *= dash_cnt;          /* integral number of patterns in length
   dash_ptr = dash_start[linetype-1];
   dash_cnt = (*dash_ptr++)>>1; /* start half into 1st dash */
   dash_on = 1;
}
else if (dash_fix)              /* line up fill dashes with 0 base */
{
   dash_ptr = dash_start[linetype-1];
   dash_cnt = *dash_ptr++;
   while(*dash_ptr) dash_cnt += *dash_ptr++;     /* sum pattern length */
   d = (long)(arc_coord(x1,y1,filldeg)*lfac);
   if (d >= 0)  d = (d % dash_cnt);
   else         d = dash_cnt + (d % dash_cnt) -1;
   if (dash_fix < 0) d = (dash_cnt - d) -1;
   dash_ptr = dash_start[linetype-1];
   dash_cnt = 0;
   dash_on = 1;
   while((dash_cnt + *dash_ptr) <= d)
   {
      dash_cnt += *dash_ptr++;
      dash_on = (dash_on^1)&1;
   }
   dash_cnt = *dash_ptr - (d - dash_cnt);
   dash_ptr++;
}
distance = 0;
do
{
   if (!dash_cnt)
   {
      dash_ptr = dash_start[linetype-1];
      dash_cnt = *dash_ptr++;
      dash_on = 1;
   }
   if ((distance + dash_cnt) > length)
   {
      if (dash_on)
         up_down = DOWN;
      else
         up_down = UP;
      sort_move(x2,y2);
      dash_cnt -= length - distance;
      distance = length;
   }
   else
   {
      distance += dash_cnt;
      if (dash_on)
```

```
                    up_down = DOWN;
                else
                    up_down = UP;
                sort_move(x1+(long)( (double)dx * distance/length),
                          y1+(long)( (double)dy * distance/length));
                dash_cnt = *dash_ptr++;
                dash_on = (dash_on ^ 1) & 1;
            }
        } while (distance < length);
    } /* end of if(linetype) */
    else
    {
        /* solid vector         */

        up_down = DOWN;
        sort_move(x2,y2);
    }
}


/**************
 * clip_line *
 **************/

static long clip_line(long p1,long p2,long p3)
{
    if(!p3) p3 = 1;     /* dont divide by 0 */
    return((long)((double)p1 * p2 / p3));
}


/**************
 * clip_move *
 **************/
    /* do a vector move, but clip to paper size  */
void clip_move(long x,long y)
{
    if ( x < 0) x = 0;
    if ( x > xsize) x = xsize;
    if ( y < 0) y = 0;
    if ( y > ysize) y = ysize;
    position_to(x,y);
}


position_to(long x, long y)
{
    vector_move(x,y);
    vecque_empty();
}

#ifdef PC
void vector_move(long x, long y)
{
    pc_vector_move(x,y);
}
#else
```

"C" CODE FORWARD PROFILE

```
void vector_move(long x, long y)
{
    long    dx,dy,adx,ady,last_ds,dxt;          /* distances: no fraction   */
    long    last_rx,last_ry,last_r,r,dr;        /* slopes: 14 bits fraction */
    long    a,acurve,atemp,amajor,last_aminor; /* acclerations: 8 bit fract */
    long    vmax,vmax2,vlim,vmajor,vminor;      /* velocities: no fraction  */

    dx = x - x_pres;
    dy = y - y_pres;
    adx = abs(dx);
    ady = abs(dy);

    recursion_level++;
    /* recursively call to reduce all moves to 16 bits */
    while( (adx > SIXTEEN_BIT) || (ady > SIXTEEN_BIT) )
    {
        vector_move( x - (dx>>1), y - (dy>>1));
        dx = x - x_pres;
        dy = y - y_pres;
        adx = abs(dx);
        ady = abs(dy);
    }
    recursion_level--;
    x_pres += dx;
    y_pres += dy;

        /* the following section was "setup_variables()" from cgm_init.c
         * moved here to ease some problems with changing velocities on
         * a pen by pen basis during sorting.
         */
     if(pen_up)
     {
         ax_max = up_a;
         vx_max = up_v;
         ay_max = up_a;
         vy_max = up_v;
     }
     else
     {
         ax_max = down_a;
         vx_max = down_v;
         ay_max = down_a;
         vy_max = down_v;
     }
     if(machine_id)
     {
         if(ax_max>x_maxa) ax_max = x_maxa;
         if(vx_max>x_maxv) vx_max = x_maxv;
     }
       /* end of "setup_variables() code */

    if(optimize == 0)
    {
        x_sort = x_pres;
        y_sort = y_pres;
    }

    if(v2)
```

```
{
    /* save old slopes so we can calculate dr */
    last_rx = rx;
    last_ry = ry;
    last_r = absr;
    last_aminor = aminor;
    last_ds = ds;
}

/* compute new slopes */
if(adx > ady)       /* X axis major */
{
    ds = adx;
    r = ry = ((long)dy<<14)/adx;
    if(dx > 0) rx = 1<<14;
    else       rx = -1<<14;
    amajor = ax_max;
    aminor = ay_max;
    if(!pen_up && cons_velocity)
    {
        vmajor = (vx_max * cons_vel[(ady*20)/adx]) >>8;
    }
    else vmajor = vx_max;
    vminor = vy_max;
}
else
{
    if(!ady) return;     /* nothing to plot */
    ds = ady;
    r = rx = ((long)dx<<14)/ady;
    if(dy > 0) ry = 1<<14;
    else       ry = -1<<14;
    amajor = ay_max;
    aminor = ax_max;
    if(!pen_up && cons_velocity)
    {
        vmajor = (vy_max * cons_vel[(adx*20)/ady]) >>8;
    }
    else vmajor = vy_max;
    vminor = vx_max;
}

if(an_status & MOTOR_HOT)   /* motors may be hot, reduce accelerations */
{
    amajor >>= 2;
    aminor >>= 2;
}
absr = abs(r);

/* compute maximum velocity */
/* NOTE: this code needs to be changed to support constant velocity */
if(absr)
{
    vmax = (vminor<<14)/absr;
    if(vmax > vmajor) vmax = vmajor;
}
else vmax = vmajor;
if(vmax > ds) vmax = ds;
vmax2 = (vmax*vmax);
```

```
/* if starting at nonzero velocity, we need to examine curvature */
if(v2)
{
    acurve = min(last_aminor,aminor);

    /* compute amount of curvature at this vertex */
    dr = abs(rx - last_rx) + abs(ry - last_ry);

    /* if big (ie. greater than 22 degrees) ramp down to 0 */
    /* if real big (ie. greater than 45 degrees) also delay     */
    if(dr > THRESHOLD)
    {
        reverse_ramp();
        v2 = 0;
        ramp_count = 0;
        vec_left = 0;
        end_thresh = 0;
        if(dr > THRESHOLD1) servo_wait();
    }

    /* otherwize limit error and acceleration by limiting velocity */
    else if (dr)
    {
        /* limit velocity to constrain error */
        vlim = (acurve << 7)/dr;

        if(vlim < vmax)
        {
            vlim *= vlim;
        }
        else
        {
            vlim = vmax2;
        }
        if(vlim < v2) v2 = vlim;

        /* now limit velocity to constrain acceleration */
        /* dxt is the distance we need to apply dr to */
        /* this is the minimum of last_ds, ds, and */
        /* 1/2 filter distance at current velocity */

        dxt = sroot(v2,2);
        if(ds < last_ds) last_ds = ds;
        if(last_ds < dxt) dxt = last_ds;

        /* limit acceleration of curvature to 3/4 minor axis limit */
        /* aminor has 8 fractional bits, dr has 14, so automatic   */
        /* divide by 2**6 or 64, so we multiply by 48 to get 3/4   */
        /* NOTE: to handle 62 case and switch in major axis,       */
        /* we need to use minimum of minor axis limits             */

        vlim = (48L * acurve * dxt) / dr;

        /* if we needed to limit v, we must recalculate dxt */
        if(vlim < v2)
        {
            v2 = vlim;
            dxt = sroot(v2,2);
            if(last_ds < dxt) dxt = last_ds;
        }
```

```
            /* reset previous vector terminal velocity to new constraint */
            if(v2 < ip.v->vu)
            {
                ip.v->vu = v2;
            }

            /* calculate minor axis acceleration due to curvature */
            if(dxt)
            {
                acurve -= (((dr * v2) / dxt ) >> 6);
            }
            /* recalculate previous vector acceleration limit */
            if(last_r)
            {
                a = ( acurve << 14) / last_r;
                if(a < ip.v->a) ip.v->a = a;
            }
        }
    }
    else
    {
        acurve = aminor;
    }
    /* now compute this vector acceleration limit */
    if(absr)
    {
        a = (acurve<<14)/absr;
        if(a > amajor) a = amajor;
    }
    else a = amajor;

    /* compute ramp up velocity(squared) and limit to max velocity */
    v2 += ((long)a * ds)>>7;    /* times 2 minus 8 fraction bits from a */
    v2 = min (vmax2,v2);

    /* see if buffer is full and check for local entry  */
    while( (in_count+vec_cmndcnt) >= vecque_size)
    {
        if(recursion_level == 0)
        {
            reverse_ramp();
            checklocal();
        }
        else pen_changer_monitor();
    }

    /* put data into servo buffer */
    if(ip.v == vecque_end.v) ip.v = vecque_start.v;
    else ip.v++;

    ip.v->dx = dx;
    ip.v->dy = dy;
    ip.v->vu = v2;
    ip.v->a = a;
    ip.v->vm = vmax<<8;
    ip.v->r = r;
    vec_left++;
    in_count++;
```

```
        if(recursion_level == 0)
        {
            if( (in_count > in_thresh) || (vec_cmndcnt < end_thresh) )
            {
                reverse_ramp();
            }
            checklocal();
        }
}
```

REVERSE PROFILE

```
/* reverse ramp profile: generate ramp down */
/* start at ip, and back up to bp        */
/* save new bp as point where 1st reach vu value */
void reverse_ramp()
{
    register SERVO_PTR p;
    register long v;
    char still_ramp;
    short next_ramp_count,reverse_term;
    register short d1,d2;
    extern char pendown_flag;

    if(pendown_flag)
    {
        vec_cmndcnt++;
        pendown_flag = 0;
    }
    if(!in_count) return;

    v = 0;
    reverse_term = ramp_count;
    ramp_count = -in_count;
    still_ramp = 1;
    p.v = ip.v;
    do
    {
        if(v < p.v->vu)
        {
            p.v->vd = v;
        }
        else
        {
            if(still_ramp)
            {
                next_ramp_count = ramp_count;
                still_ramp = 0;
            }
            v = p.v->vu;
            p.v->vd = v;
        }
        if(++ramp_count == reverse_term) break;
        d1 = p.v->dx; if(d1<0) d1 = -d1;
        d2 = p.v->dy; if(d2<0) d2 = -d2;
        if(d1<d2) d1=d2;
        v += ( (long)p.v->a * d1) >> 7;
        if(p.v == vecque_start.v) p.v = vecque_end.v;
        else p.v--;
    } while( (ramp_count < 0) || (ramp_count < (vec_cmndcnt-2) ));
    if(!still_ramp) ramp_count = next_ramp_count;
```

```
    ramp_count += in_count;
    vec_cmndcnt += in_count;
    reverse_term += in_count;
    in_count = 0;

    if(vec_cmndcnt < reverse_term)       /* we are behind */
    {
        end_thresh = 0;
    }
    else                                 /* set end_thresh before ramp down */
    {
        if(vec_left > vec_cmndcnt) vec_left = vec_cmndcnt;
        end_thresh = ramp_count + (ramp_factor * (vec_left - ramp_count)) >> 4;
    }

}

#endif


/********
 * cell *
 ********/
    /* compute which cell point (x,y) is in      */
    /*                                           */
    /*      9(1001)  |  8(1000)  |  a(1010)      */
    /*     __________|___________|__________     */
    /*      1(0001)  |  0(0000)  |  2(0010)      */
    /*     __________|___________|__________     */
    /*      5(0101)  |  4(0100)  |  6(0110)      */
long cell (long x,long y)
{
    long tcell;

    if (x < clip_left) tcell = 1;
    else if (x > clip_right) tcell = 2;
    else tcell = 0;

    if (y < clip_bottom) return(tcell | 4);
    else if (y > clip_top) return(tcell | 8);
    else return (tcell);
}
```

68000 Assembly TEKTRONIX format Interrupt Code

```
; divide 32 bit d1 by 16 bit (a0)
; destroys registers d2 and d3
; used in vector ramp control
div32
        move.w  d1,d3               ; save low dividend
        clr.w   d1
        swap    d1
        divu    (a0),d1             ; high part of divide
        move.l  d1,d2               ; move rem to d2
        swap    d1                  ; save high part quotient
        move.w  d3,d2               ; merge low dividend with high rem
        divu    (a0),d2             ; low part quotient
        move.w  d2,d1               ; merge with high part
        rts


; get next data point from vector que
; CAUTION: get_point must not use d0 or d1
get_point
        add.w   #ENTRY_SIZE,a0      ; index to next vector
        cmp.w   vecque_end,a0       ; check for wrap
        ble.s   get_point1
        move.w  vecque_start,a0     ; wrap
get_point1
        move.w  a0,vec_outptr       ; save new pointer
        tst.w   (a0)
        bmi.s   get_point6
        move.w  dx(a0),d2
        ext.l   d2
        asl.l   #8,d2
        add.l   d2,x_s
        tst.l   d2
        bpl.s   get_point2
        neg.l   d2
get_point2
        move.w  dy(a0),d3
        ext.l   d3
        asl.l   #8,d3
        add.l   d3,y_s
        tst.l   d3
        bpl.s   get_point3
        neg.l   d3
get_point3
        cmp.l   d2,d3
        bge.s   get_point4
        clr.w   major
        move.l  d2,s
        bra.s   get_point5
get_point4
        move.w  #16,major
        move.l  d3,s
get_point5
        clr.l   rem
get_point6
        rts
```

```
; Polyline vector ramp control

; register usage:
;  d0   velocity
;  a0   vec_outptr

        global  get_command
get_command

; see if vector is in progress
        tst.b   new_data
        bne.s   initial_vtest
        tst.l   s
        bne     do_vector
        clr.b   c.ramp_down
        tst.w   velocity
        beq.s   check_pause
        subq.w  #1,c.vec_cmndcnt
        bne.s   next_command
        clr.w   velocity                ; must clear and wait one interrupt
        bra     return0                 ; before allowing keymove

check_pause
        move.b  c.req_pause,c.ack_pause     ;check for pause request
        bne     return0                 ; paused
        tst.w   c.vec_cmndcnt           ; see if anything to do
        beq     no_command              ; no, idle

; get next vector or command
next_command
        and.b   #NIDLE_MASK,c.NEC_control       ;set servos not idle
        bsr     get_point               ; read in 1st endpoint
        bmi     special_command

initial_vtest
        clr.b   new_data
        move.b  #1,c.ramp_up            ; set ramp up flag

; initial velocity to previous velocity of current major axis
        move.w  vel_ptr,a1              ; set velocity to abs(major v)
        move.w  major,d0
        move.w  0(a1,d0.w),d0           ; get major axis velocity
        bpl.s   init_1
        neg.w   d0
init_1  ext.l   d0

; compute new vtest
        move.w  vd(a0),vterm
        move.w  (a0),d2                 ; compute 3a
        add.w   d2,d2
        add.w   (a0),d2
        move.w  d2,three_a+2
        move.w  d0,d1
        mulu    d0,d1                   ; v*v
        sub.l   vterm,d1                ; v*v-vd
        bpl.s   new1
        neg.l   d1
        bsr     div32                   ; (vd-v*v)/a
```

```
        bra.s   new2
new1    bsr     div32                           ; (v*v-vd)/a
        neg.l   d1                              ; (vd-v*v)/a
new2    move.w  (a0),d2
        ext.l   d2                              ; a
        add.l   d0,d2                           ; v + a
        add.l   d0,d2                           ; 2v + a
        sub.l   s,d2                            ; 2v + a - s
        add.l   d2,d2                           ; 2(2v+a-s)
        sub.l   d2,d1                           ; (vd-v*v)/a + 2(s-2v-a)
        move.l  d1,vtest
        bra.s   do_ramp

do_vector
        move.w  velocity,d0
        ext.l   d0                              ; make velocity long
        tst.b   c.ramp_up
        beq.s   no_ramp_up

        tst.l   vtest
do_ramp
        bmi.s   start_ramp_down

; ramp up
        add.w   (a0),d0                         ; velocity += a
        cmp.w   ym(a0),d0                       ; compare to max v
        blt.s   do_ramp_up

; reach max velocity
        clr.b   c.ramp_up;
        tst.b   c.exact_velocity
        bne.s   cap_v

; went slightly over max velocity, leave velocity here and adjust vtest
        move.w  (a0),d1                         ; a
        ext.l   d1
        add.l   d0,d1                           ; v + a
        add.l   d0,d1                           ; 2v + a
        sub.l   d1,vtest                        ; vtest -= 2v+a
        bra.s   end_fix

cap_v
        move.w  vm(a0),d0
; recalculate vtest = 2(s-v) + (vd - v*v)/a
        move.w  d0,d1                           ;v
        mulu    d0,d1                           ;v*v
        sub.l   vterm,d1                        ;v*v - vd
        bpl.s   max1
        neg.l   d1
        bsr     div32                           ;(vd-v*v)/a
        bra.s   max2
max1    bsr     div32                           ;(v*v-vd)/a
        neg.l   d1                              ;(vd-v*v)/a
max2    move.l  s,d2                            ;s
        sub.l   d0,d2                           ;s-v
        sub.l   d0,d2                           ;s-2v
        add.l   d2,d2                           ;2(s-2v)
        add.l   d1,d2                           ;2(s-2v) + (vd-v*v)/a
        move.l  d2,vtest
        bra.s   end_fix
```

```
do_ramp_up
        move.l  d0,d1                   ; v
        asl.l   #2,d1                   ; 4v
        add.l   three_a,d1              ; 4v + 3a
        sub.l   d1,vtest                ; vtest -= 4v + 3a
        bra.s   end_fix


; no hold, go directly to ramp down
start_ramp_down
        clr.b   c.ramp_up
; adjust vtest to current v
        move.w  d0,d1                   ;v
        add.w   (a0),d1                 ;v+a
        ext.l   d1
        add.l   d1,d1                   ;2(v+a)
        add.l   d1,vtest

no_ramp_up
; test for ramp down this interupt
        tst.l   vtest
        bpl.s   hold
        move.b  #1,c.ramp_down
        move.l  three_a,d1
        add.l   d1,vtest                ; vtest += 3a (2v's cancel)
        sub.w   (a0),d0                 ; v -= a
        bra.s   end_fix

; hold this interupt
hold    move.l  d0,d1                   ; v
        add.l   d1,d1                   ; 2v
        sub.l   d1,vtest                ; vtest -= 2v

end_fix
        cmp.w   (a0),d0                 ; see if v < a
        bge.s   end_fix1
        move.w  (a0),d0                 ; v = a
end_fix1
        cmp.l   s,d0                    ; see if s < v
        ble.s   end_ramp
        tst.l   vterm                   ; and ramping down to 0
        bne.s   end_ramp
        move.l  s,d0                    ; yes, move remaining s
end_ramp
        move.w  d0,velocity
        beq     no_ratio                ; no velocity, skip ratio

        global  ratio_velocity
ratio_velocity

; Part 2: ratio velocities
; now d0 (velocity) becomes vt in c code

        addq.l  #1,c.plot_count         ; run time increment
        sub.l   d0,s                    ; s -= vs
        bgt.s   ratio1                  ; see if vt <= s

; end of this vector, move whatever is left
```

```
         move.l   x_s,d6
         move.l   y_s,d7
         move.l   s,d0
         beq      ratio_done
         neg.l    d0                        ; remaining velocity

; and get next vector if there is more velocity needed
         subq.w   #1,c.vec_cmndcnt
         beq      hang                      ; invalid overrun
         bsr      get_point                 ; get next point
         bmi      hang                      ; command is not possible here
         sub.l    d0,s
         bgt.s    ratio0
         move.l   x_s,d6                    ; only do this vector
         move.l   y_s,d7
         clr.l    s
         bra      ratio_done
ratio0   move.b   #1,new_data
         clr.b    c.ramp_down
ratio1   move.w   d0,d2
         muls     r(a0),d2                  ; vminor = r * vs
         asl.l    #2,d2                     ; get rid of excess fraction
         swap     d2                        ; d2 = minor axis velocity w/o rem

         tst.w    major                     ; X == 0, Y == 16
         bne      ymajor
; x axis major
         add.w    d2,d7                     ; vy += vminor
         muls     dx(a0),d2                 ; d2 = dx * vys
         tst.w    dx(a0)
         bmi.s    xneg
         add.w    d0,d6                     ; vx += vs
         muls     dy(a0),d0                 ; d0 = dy * vxs
         sub.l    d2,d0                     ; d0 = dy * vxs - dx * vys
         add.l    d0,rem                    ; rem += dy * vxs - dx * vys
         bgt.s    xremfix
         bra.s    ratio_done
xneg
         sub.w    d0,d6                     ; vx -= vs
         muls     dy(a0),d0                 ; d0 = - dy * vxs
         add.l    d2,d0                     ; d0 = dx * vys - dy * vxs
         sub.l    d0,rem                    ; rem += dy * vxs - dx * vys
         bpl.s    ratio_done
xremfix
         addq.w   #1,d7                     ; vys++
         move.w   dx(a0),d0
         ext.l    d0
         sub.l    d0,rem                    ; rem -= dx
         bra.s    ratio_done

; y axis major
ymajor
         add.w    d2,d6                     ; vx += vminor
         muls     dy(a0),d2                 ; d2 = dy * vxs
         tst.w    dy(a0)
         bmi.s    yneg
         add.w    d0,d7                     ; vy += vs
         muls     dx(a0),d0                 ; d0 = dx * vys
         sub.l    d2,d0                     ; d0 = dx * vys - dy * vxs
         sub.l    d0,rem                    ; rem += dy * vxs - dx * vys
```

```
         bmi.s    yremfix
         bra.s    ratio_done
yneg
         sub.w    d0,d7                   ; vy -= vs
         muls     dx(a0),d0               ; d0 = - dx * vys
         add.l    d2,d0                   ; d0 = dy * vys - dx * vys
         add.l    d0,rem                  ; rem += dy * vxs - dx * vys
         ble.s    ratio_done
yremfix
         addq.w   #1,d6                   ; vxs++
         move.w   dy(a0),d0
         ext.l    d0
         add.l    d0,rem                  ; rem += dy

ratio_done
         ext.l    d6
         sub.l    d6,x_s
         ext.l    d7
         sub.l    d7,y_s
no_ratio

;  Part 3: Filter velocities and compute new reference velocities */

; now filter new reference value using double integrating filter:
; 16 vel(n) =          v(n-6)+2v(n-5)+3v(n-4)+4v(n-3)+3v(n-2)+2v(n-1) +v(n)
; 16 vel(n-1) = v(n-7)+2v(n-6)+3v(n-5)+4v(n-4)+3v(n-3)+2v(n-2)+ v(n-1)
;
; subtract these 16(vel(n) - vel(n-1)) =
; 16 acc(n) =          -v(n-7)-v(n-6)-v(n-5)-v(n-4)+v(n-3)+v(n-2)+v(n-1)+v(n)
; 16 acc(n-1) = -v(n-8)-v(n-7)-v(n-6)-v(n-5)+v(n-4)+v(n-3)+v(n-2)+v(n-1)
; subtract these to get incremental update to 16 acc(n):
; 16 acc(n) = 16 acc(n-1) + v(n-8) -2v(n-4) + v(n)
;
; the implementation is thus:
;    acc +=  v(n-8) + v(n) - 2 v(n-4)
;    vel += acc
;
;    NOTE:
;    v(n-8) is added to acc at the end of the previous update, so that
;    its location in the buffer can be overwritten with v(n) in Part 2
;    of this module above.
;
;


          global   return0
return0
          move.b   X_ref_lag+1,X_ref
          move.b   X_ref_lag,X_ref_lag+1
          move.b   Y_ref_lag+1,Y_ref
          move.b   Y_ref_lag,Y_ref_lag+1

          lea      velocity_buffer,a0
          move.w   vel_ptr,a1            ; pointer at v(n-1)
          move.w   x_acc,d0              ; get acc(n-1)
          move.w   y_acc,d1
          sub.w    #6,a1                 ; go to n-4
          cmp.l    a0,a1
          bge.s    filter1
```

```
        add.w   #16,a1              ; wrap
filter1
        sub.w   (a1),d0             ; - 2 v(n-4)
        sub.w   (a1),d0
        sub.w   vy(a1),d1
        sub.w   vy(a1),d1
        sub.w   #8,a1               ; go to n-8
        cmp.l   a0,a1
        bge.s   filter2
        add.w   #16,a1
filter2
        move.w  a1,vel_ptr          ; save ptr for next update
        add.w   d6,d0               ; add v(n) to acc
        add.w   d7,d1
        add.w   (a1),d0             ; add v(n-8) to acc
        add.w   vy(a1),d1
        move.w  d6,(a1)             ; overwrite v(n-8) with v(n)
        move.w  d7,vy(a1)
        move.w  d0,x_acc
        move.w  d1,y_acc
        ext.l   d0
        ext.l   d1
        move.l  x_vel,d2
        move.l  y_vel,d3
        add.l   d0,d2               ; vel(n) = vel(n-1) + acc(n)
        add.l   d1,d3
        move.l  d2,x_vel
        move.l  d3,y_vel

; add unfiltered velocity to position (this is needed unfiltered for detecting
; edges in local mode
        add.b   d6,oldxf
        bcc.s   x_ok
        add.w   #256,d6
x_ok    asr.w   #8,d6
        ext.l   d6
        add.l   d6,c.oldxh
        add.b   d7,oldyf
        bcc.s   y_ok
        add.w   #256,d7
y_ok    asr.w   #8,d7
        ext.l   d7
        add.l   d7,c.oldyh

; integerize reference velocity
        clr.w   d6
        asl.l   #4,d2
        add.w   d2,x_fraction
        swap    d2
        addx.w  d6,d2
        ext.l   d2
        move.b  d2,X_ref_lag

        asl.l   #4,d3
        add.w   d3,y_fraction
        swap    d3
        addx.w  d6,d3
        ext.l   d3
        move.b  d3,Y_ref_lag
```

```
; Part 4: Calculate feed forward terms
; dQ/dl have accelerations with 12 bits fraction
; d2/d3 have velocities with no fraction
        move.w  c.x_fff,d6
        muls    c.xaff,d0
        muls    c.xvff,d2
        beq.s   ffx2
        bpl.s   ffx1
        neg.w   d6
ffxl'   move.w  d6,xfff
ffx2    add.l   d2,d0
        asl.l   #2,d0
        swap    d0
        add.w   xfff,d0
        move.w  c.y_fff,d6
        muls    c.yaff,dl
        muls    c.yvff,d3
        beq.s   ffy2
        bpl.s   ffyl
        neg.w   d6
ffyl    move.w  d6,yfff
ffy2    add.l   d3,dl
        asl.l   #2,dl
        swap    dl
        add.w   yfff,dl

;Clip and output feedforward
        moveq   #7fh,d6
        cmp.w   d6,d0
        blt.s   ffx3
        move.w  d6,d0
ffx3    cmp.w   d6,dl
        blt.s   ffy3
        move.w  d6,dl
ffy3    neg.w   d6
        cmp.w   d6,d0
        bgt.s   ffx4
        move.w  d6,d0
ffx4    cmp.w   d6,dl
        bgt.s   ffy4
        move.w  d6,dl
ffy4    move.b  d0,X_ff
        move.b  dl,Y_ff
```

## Claims

1. In a graphics plotter for drawing a series of connected vector lines forming a plot, said plotter having motor control means for controlling motor means which drive a pen to move relative to a medium at a variable velocity in a plane defined by a major axis and a minor axis perpendicular to said major axis, the improvement wherein said motor control means comprises means for determining an optimum velocity of said pen along said major axis for each point along said series of connected vector lines in dependence on the respective slopes of said vector lines.

2. The improvement in a graphics plotter as recited in claim 1, wherein said optimum velocity determining means comprises:
   means for ramping down said optimum velocity at predetermined points along said series of connected vector lines which precede a point at which a maximum change in direction occurs; and
   means for ramping up said optimum velocity at predetermined points along said series of connected vector lines which succeed said point of maximum change in direction.

3. The improvement in a graphics plotter as recited in claim 2, wherein said optimum velocity determining means further comprises:
   means for ramping down said optimum velocity at predetermined points along said series of connected vector lines which precede an end point of said series of connected vector lines; and

means for ramping up said optimum velocity at predetermined points along said series of connected vector lines which succeed a starting point of said series of connected vector lines.

**4.** The improvement in a graphics plotter as recited in claim 3, wherein said optimum velocity determining means further comprises means for varying said optimum velocity such that the pen velocity in said plane is maintained at a predetermined maximum velocity at predetermined points along said series of connected vector lines which succeed a point during ramp up at which said pen velocity in said plane equals said predetermined maximum velocity.

**5.** The improvement in a graphics plotter as recited in claim 4, wherein said optimum velocity is ramped up at a constant acceleration and is ramped down at a constant deceleration.

**6.** The improvement in a graphics plotter as recited in claim 5, wherein the magnitude of said constant acceleration is equal to the magnitude of said constant deceleration.

**7.** The improvement in a graphics plotter as recited in claim 2, wherein said optimum velocity determining means further comprises means for determining a minimal nonzero optimal velocity at said point of maximum change in direction, said minimal nonzero optimal velocity being the junction of said ramped-down optimal velocity preceding said point of maximum change in direction and said ramped-up optimal velocity succeeding said point of maximum change in direction.

**8.** The improvement in a graphics plotter as recited in claim 1, further comprising filtering means for limiting the acceleration of said pen along said major axis at said point of maximum change in direction to a value less than infinity.

**9.** The improvement in a graphics plotter as recited in claim 8, wherein said filtering means outputs a minimal nonzero terminal velocity of said pen along said major axis at said point of maximum change in direction which results in a pen trajectory that differs from a desired pen trajectory by an amount which is less than or equal to a predetermined acceptable error.

**10.** The improvement in a graphics plotter as recited in claim 8, wherein said filtering means comprises a double integrating filter which is implemented in a sampled domain.

**11.** In a graphics plotter for drawing a series of connected vector lines forming a plot, said plotter having motor control means for controlling motor means which drive a pen to move relative to a medium at a variable velocity in a plane defined by a major axis and a minor axis perpendicular to said major axis, the improvement wherein said motor control means comprises means for determining a minimal nonzero terminal velocity of said pen along said major axis at a point at which a maximum change in direction occurs.

**12.** The improvement in a graphics plotter as recited in claim 10, wherein said minimal nonzero terminal velocity determining means comprises:

means for determining a minimal nonzero optimal velocity at said point of maximum change in direction, said minimal nonzero optimal velocity being the junction of a ramped-down optimal velocity preceding said point of maximum change in direction and a ramped-up optimal velocity succeeding said point of maximum change in direction; and

filtering means for limiting the acceleration of said pen along said major axis at said point of maximum change in direction to a discrete value which results in a pen trajectory that differs from a desired pen trajectory by an amount which is less than or equal to a predetermined acceptable error.

**13.** A method for use in a graphics plotter for drawing a series of connected vector lines forming a plot using a plotter having motor control means for controlling motor means which drive a pen to move relative to a media at a variable velocity in a plane defined by a major axis and a minor axis perpendicular to said major axis, comprising the step of:

determining an optimum velocity of said pen along said major axis for each point along said series of_connected vector lines in dependence on the respective slopes of said vector lines.

**14.** The method as recited in claim 13, wherein said optimum velocity determining step comprises the steps of:

ramping down said optimum velocity at predetermined points along said series of connected vector lines which precede a point at which a maximum change in direction occurs; and

ramping up said optimum velocity at predetermined points along said series of connected vector lines which succeed said point of maximum change in direction.

**15.** The method as recited in claim 14, wherein said optimum velocity determining step further comprises the steps of:

ramping down said optimum velocity at predetermined points along said series of connected vector lines which precede an end point of said series of connected vector lines; and

ramping up said optimum velocity at predetermined points along said series of connected vector lines which succeed a starting point of said series of connected vector lines.

**16.** The method as recited in claim 15, wherein said optimum velocity determining step further comprises the step of varying said optimum velocity such that the pen velocity in said plane is maintained at a predetermined maximum velocity at predetermined points along said series of connected vector lines which succeed a point during ramp up at which said pen velocity in said plane equals said predetermined maximum velocity.

**17.** The method as recited in claim 16, wherein said optimum velocity is ramped up at a constant acceleration and is ramped down at a constant deceleration.

**18.** The method as recited in claim 17, wherein the magnitude of said constant acceleration is equal to the magnitude of said constant deceleration.

**19.** The method as recited in claim 14, wherein said optimum velocity determining step further comprises the step of determining a minimal nonzero optimal velocity at said point of maximum change in direction, said minimal nonzero optimal velocity being the junction of said ramped-down optimal velocity preceding said point of maximum change in direction and said ramped-up optimal velocity succeeding said point of maximum change in direction.

**20.** The method as recited in claim 13, further comprising the step of filtering the optimal velocities to limit the acceleration of said pen along said major axis at said point of maximum change in direction to a value less than infinity.

**21.** The method as recited in claim 20, wherein said filtering step comprises outputting a minimal nonzero terminal velocity of said pen along said major axis at said point of maximum change in direction which which results in a pen trajectory that differs from a desired pen trajectory by an amount which is less than or equal to a predetermined acceptable error.

**22.** The method as recited in claim 20, wherein said filtering is performed by a double integrating filter which is implemented in a sampled domain.

**23.** A method for use in a graphics plotter for drawing a series of connected vector lines forming a plot using a plotter having motor control means for controlling motor means which drive a pen to move relative to a medium at a variable velocity in a plane defined by a major axis and a minor axis perpendicular to said major axis, comprising the step of:

FIG. 1

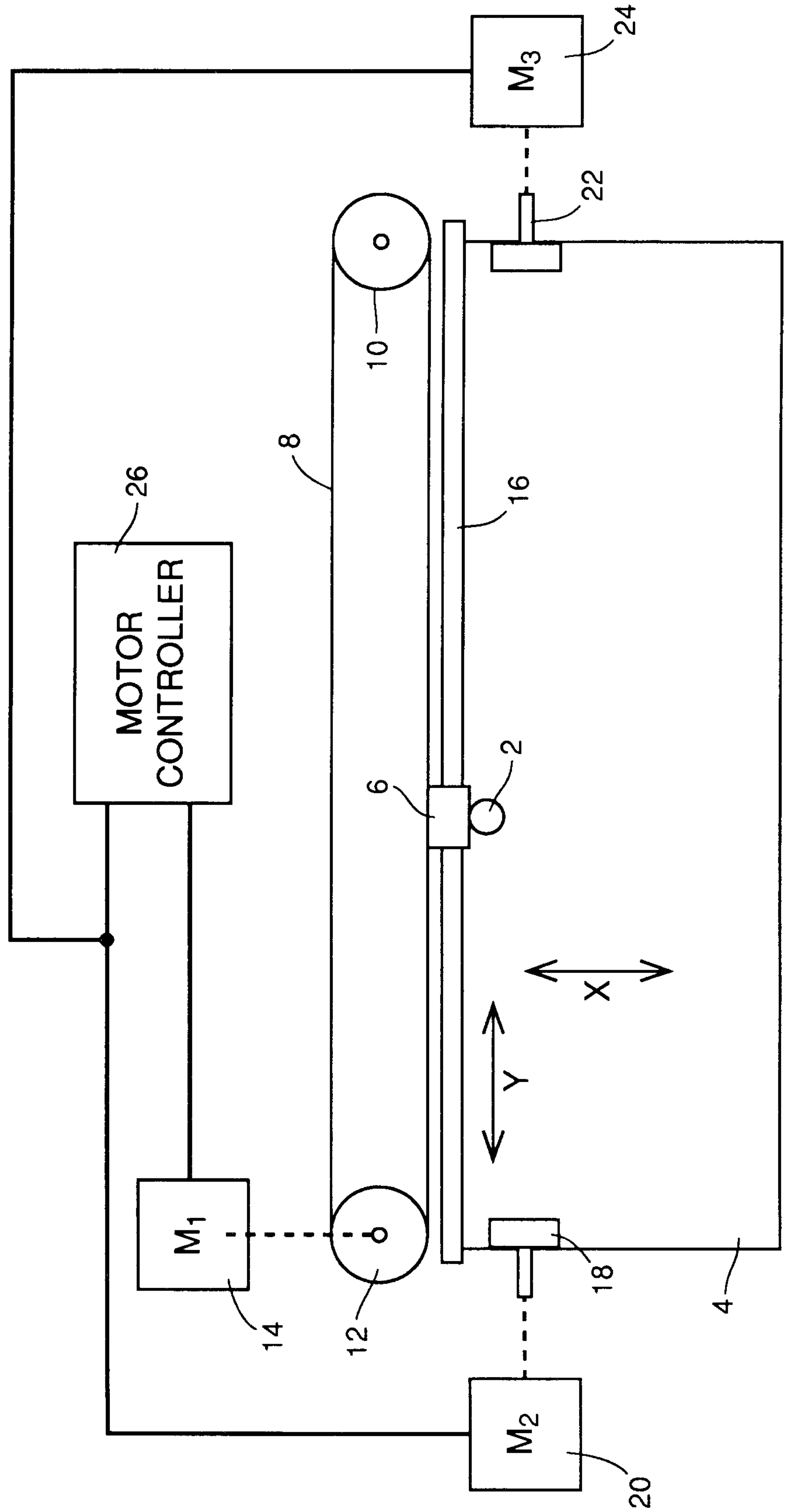

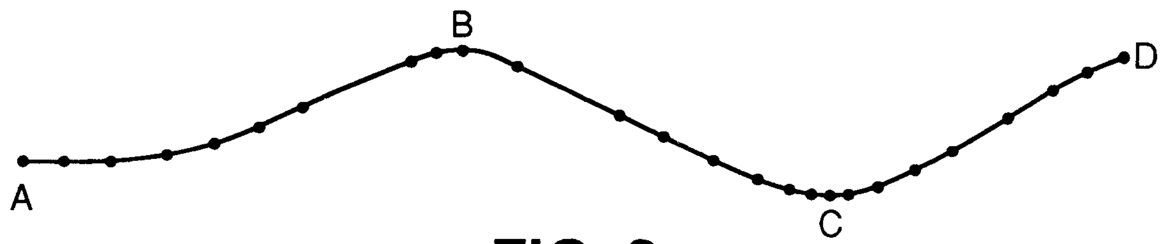


FIG. 2

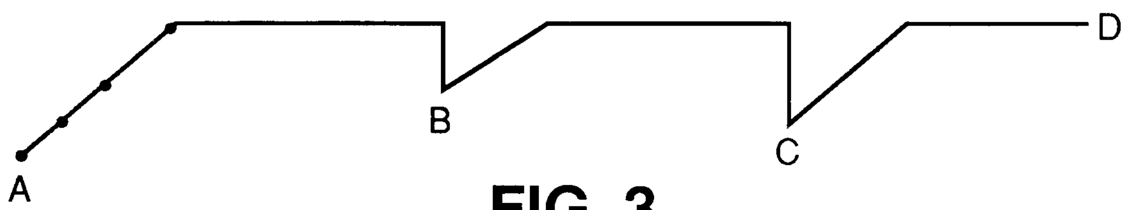


FIG. 3

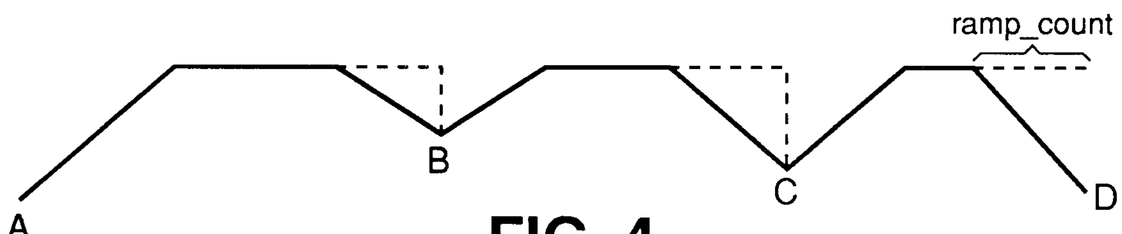


FIG. 4

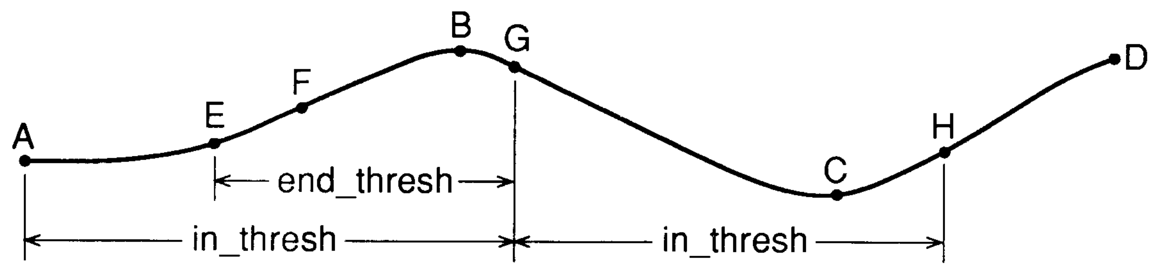


FIG. 5

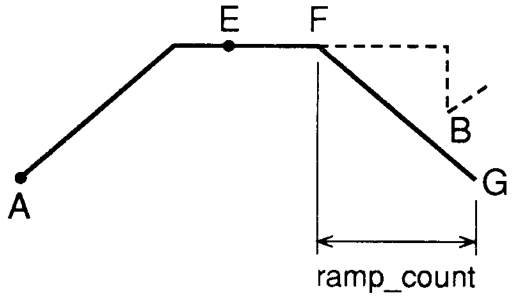


FIG. 6

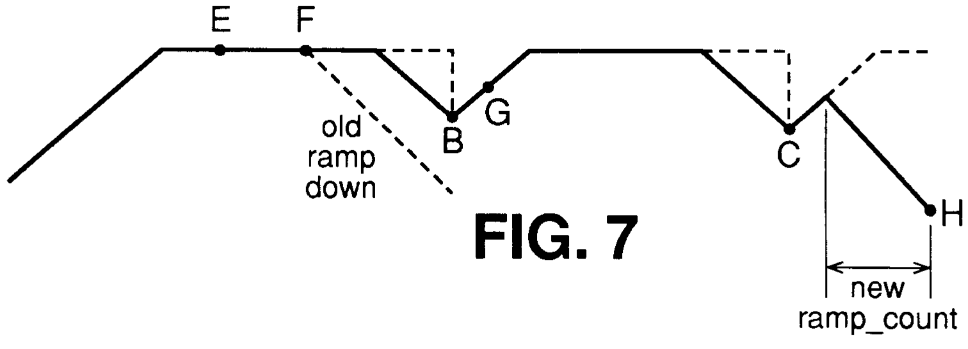


FIG. 7

FIG. 8

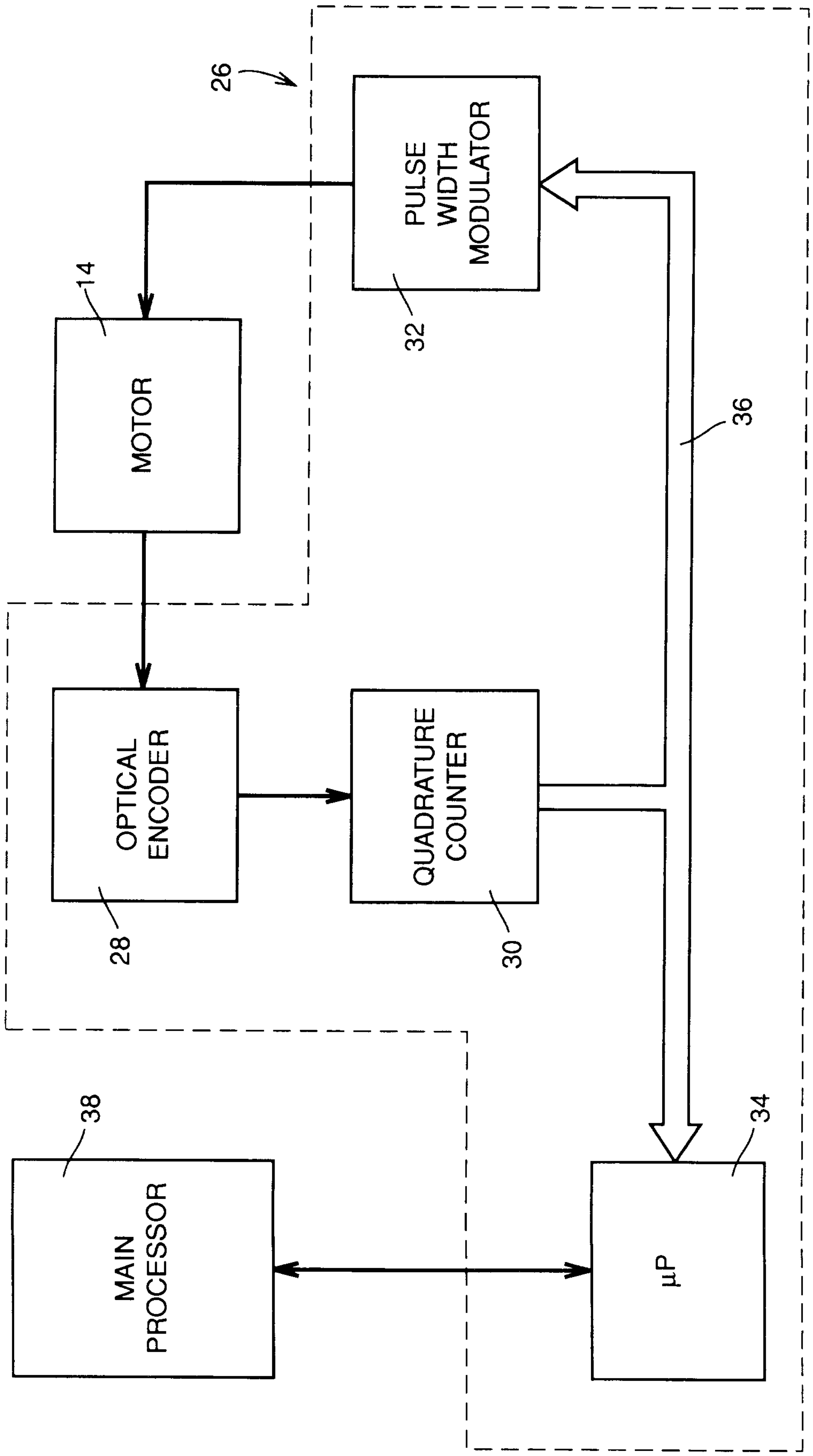
26
PULSE WIDTH MODULATOR
32
MOTOR
14
36
OPTICAL ENCODER
28
QUADRATURE COUNTER
30
MAIN PROCESSOR
38
μP
34